Europäisches Patentamt

European Patent Office

Office européen des brevets

(19)

(11) Publication number: **0 050 497**
**A1**

(12)

# EUROPEAN PATENT APPLICATION

(21) Application number: 81304845.1

(22) Date of filing: 16.10.81

(51) Int. Cl.³: **C 08 F 10/00,** C 08 F 4/64,
C 08 F 4/02

(30) Priority: 17.10.80 JP 144493/80

(71) Applicant: **TOA NENRYO KOGYO K.K.,**
1-1 Hitotsubashi, 1-Chome Chiyoda-Ku, Tokyo (JP)

(72) Inventor: **Imai, Masafumi, 1902-5 Ooaza Kamekubo
Ooi-machi, Iruma-gun Saitama-ken (JP)
Inventor: Miyazaki, Makoto, 1902-5 Ooaza Kamekubo
Ooi-machi, Iruma-gun Saitama-ken (JP)
Inventor: Imai, Chihiro, 49-5 Utsukushigaoka 4-chome
Midori-ku, Yokohama-shi Kanagawa-ken (JP)
Inventor: Yoda, Makoto, 5024-270 Ooaza Kasahata
Kawagoe-shi, Saitama-ken (JP)**

(43) Date of publication of application: 28.04.82
Bulletin 82/17

(74) Representative: **Northover, Robert Frank et al, Esso
Chemical Research Centre P.O. Box 1, Abingdon
Oxfordshire, OX13 6BB (GB)**

(84) Designated Contracting States: **DE FR GB IT NL**

(54) Catalyst components for polymerization of alpha-olefins and processes for their preparation and use.

(57)   A supported titanium-containing catalyt component for alpha-olefin polymerization is prepared by contacting a magnesium halide such as magnesium dichloride, an electron donor compound such as ethylbenzoate, an aromatic carboxylic acid or its derivative such as benzoyl chloride, an organic aluminum chloride compound such as ethylaluminum dichloride and a titanium compound such as titanium tetrachloride. The supported titanium-containing catalyst component in combination with an aluminum alkyl cocatalyst is useful for obtaining polypropylene having good bulk density.

EP 0 050 497 A1

CATALYST COMPONENTS FOR POLYMERIZATION OF ALPHA-OLEFINS AND PROCESSES FOR THEIR PREPARATION AND USE

This invention relates to catalyst components for polymerization of alpha-olefins and processes for their preparation and use, and particularly it relates to supported titanium catalyst components which can produce a polymer powder having a high bulk density at a high yield and a method for using them.

Heretofore, where an olefin polymer, and especially polypropylene, is produced using a Ziegler-Natta catalyst, many attempts have been made to obtain a catalyst having a high activity and exhibiting high stereoregularity, with the ultimate view of making the thus obtained polymer servicable as such a product without any further treatment.

In recent years, supported catalysts based on titanium compounds supported on various supports, especially magnesium compounds, have been developed for the purpose of enhancing the polymerization capability per unit weight of titanium in a titanium component which is useful as a catalyst component, and accordingly good results are being achieved, but the ultimate catalyst has not yet been obtained.

As regards supported catalysts utilizing a magnesium compound, especially magnesium chloride, as a support, in order to enhance the catalyst activity by increasing the active sites of the catalyst, many attempts have been made to pulverize the support into fine particles by mechanically grinding a mixture of magnesium chloride and other components.

For example, there are known methods for preparing catalyst components, such as a method which comprises co-grinding magnesium chloride and an aromatic carboxylic acid ester and subsequently treating by bringing the mixture into contact with titanium tetrachloride (Japanese Patent Application Laid-Open No. 126590/1975), a method which comprises co-grinding magnesium chloride and an aromatic carboxylic acid ester and subsequently treating by bringing the mixture into contact with a mixture of an addition reaction product of titanium tetrachloride and an acyl halide (Japanese Patent Application Laid-Open No. 17988/1979), a method which comprises co-grinding magnesium chloride and an acyl halide and subsequently treating by bringing the mixture into contact with a mixture of an addition reaction product of titanium tetrachloride and an ether (Japanese Patent Application Laid-Open No. 277/1978), a method which comprises co-grinding magnesium chloride and an organic acid ester, treating with an organic aluminum compound and subsequently treated by bringing the mixture into contact with titanium tetrachloride (Japanese Patent Application Laid-Open No. 160488/1979), etc.

However, since all these methods involve grinding a support, large amounts of fine powders having a wide particle size distribution and particle shape irregularity are obtained. When these catalysts are employed in the polymerization of alpha-olefins, the polymer obtained contains undesriable amounts of fine powder, the polymer has a low bulk density and shows a wide particle size distribution. At the same time the catalyst activity cannot be said to be sufficiently high, catalyst activity rapidly deteriorates with the progress of polymerization such that it is difficult to improve the catalyst efficiency by the long-term polymerization.

More recently, there has been proposed a method to prepare a catalyst component by co-grinding a co-ground product of magnesium chloride and a carboxylic acid ester, a reaction product of an aluminum halide and a halogenated hydrocarbon, and titanium tetrachloride (Japanese Patent Application Laid-Open No. 158489/1979). This method has a feature that, although employing the co-grinding technique, by polymerization of an alpha-olefin using the catalyst component obtained by this method, the formed polymer has particle properties such as high bulk density, etc. However, this method could hardly be considered advantageous from an industrial point of view because it is necessary to prepare a tacky material by the reaction of the aluminum halide and the halogenated hydrocarbon and handle it in one step of the preparation process of the catalyst and there is a possibility that coarse particles would be produced in large amounts by grinding.

It is an object of the invention to provide a catalyst component for polymerization of alpha-olefins which can produce a polymer having a high bulk density at a high yield and further which undergoes only slight deterioration of catalyst activity with the progress of polymerization and, hence, has an excellent effect to improve catalyst efficiency by long-term polymerization.

In accordance with the present invention there is provided a catalyst component which is formed by contacting:

(a)    a magnesium halide,

(b)    an electron donating compound,

(c)    an aromatic carboxylic acid or a derivative thereof such as an anhydride or halide,

(d)   an organic aluminum compound, and

(e)   a titanium compound,

and a method for polymerization alpha-olefins which is characterized by homopolymerizing an alpha-olefin or copolymerizing it with ethylene or another alpha-olefin in the presence of a catalyst composed of the above catalyst component and an organic aluminum compound.

In the above composition it is believed that the unexpected effects of this invention are the results of the combination of components (b) and (c). It is believed that the combination of both components produces a material or a reaction mechanism which give the combination the characteristic of a binder.

As the magnesium halide, there may be mentioned magnesium dihalides, i.e., magnesium chloride, magnesium bromide and magnesium iodide, among which magnesium chloride is particularly preferred.

For the convenience of use, these magnesium halides are advantageously employed as powders having in general an average particle diameter of from 1 to 50 microns, although those of a greater particle diameter can also be employed.

Further, these magnesium halides are preferably those which contain substantially no water of crystallization, i.e., the so called anhydrides. Therefore, where a commercially available product is to be used, it is desired to treat the magnesium halide by heating at 200-600°C in the presence of an inert gas such as nitrogen, or at 100-400°C under reduced pressure.

As the electron donating compound, there may be mentioned carboxylic acid esters, alcohols, ethers, ketones, amines, amides, nitriles, aldehydes, alcoholates, phosphorous, arsenic or antimony compounds in which each element is attached directly or via carbon or oxygen to the organic group, phosphamides, thioethers, thioesters and carbonic acid esters, among which the carboxylic acid esters are preferarably employed.

Specific examples of the carboxylic acid esters include aliphatic carboxylic acid esters such as butyl formate, ethyl acetate, butyl acetate, ethyl butyrate, isobutyl isobutyrate, ethyl acrylate, methyl methacrylate, diethyl maleate and diethyl tartrate, alicyclic carboxylic acid esters such as ethyl cyclohexanecarboxylate and diethyl cis-4-cyclohexene -1,2-dicarboxylate, benzoic acid alkyl esters such as methyl benzoate, ethyl benzoate, n-propyl benzoate, isopropyl benzoate, n-butyl benzoate, isobutyl benzoate,

0050497

- 4 -

tert-butyl benzoate, n-amyl benzoate, isoamyl benzoate, n-hexyl benzoate, n-octyl benzoate and 2-ethylhexyl benzoate, benzoic acid cycloalkyl esters such as cyclopentyl benzoate and cyclohexyl benzoate, benzoic acid aryl esters such as phenyl benzoate, 4-tolyl benzoate and benzyl benzoate, hydroxybenzoic acid esters such as methyl p-hydroxybenzoate, ethyl p-hydroxybenzoate, n-propyl p-hydroxybenzoate, isobutyl-p-hydroxybenzoate, isoamyl p-hydroxybenzoate, n-hexyl p-hydroxybenzoate, 2-ethylhexyl p-hydroxybenzoate, cyclohexyl p-hydroxybenzoate, phenyl p-hydroxybenzoate, 3-tolyl p-hydroxybenzoate, methyl salicylate, ethyl salicylate, isobutyl salicylate, isoamyl salicylate and phenyl salicylate, alkoxybenzoic acid esters such as methyl p-methoxybenzoate, ethyl p-methoxybenzoate, isopropyl p-methoxybenzoate, isobutyl p-methoxybenzoate, phenyl p-methoxybenzoate, ethyl o-methoxybenzoate, methyl p-ethoxybenzoate, ethyl p-ethoxybenzoate, n-butyl p-ethoxybenzoate and phenyl p-ethoxybenzoate, alkyobenzoic acid estes such as methylp-toluate, ethyl p-toluate, isopropyl p-toluate, isobutyl p-toluate, isoamyl p-toluate, phenyl p-toluate, methyl p-ethylbenzoate, ethyl p-ethylbenzoate and sec-butyl p-ethylbenzoate.

Among the above-mentioned carboxylic acid esters, aromatic carboxylic acid esters such as the benzoic acid alkyl esters, hydroxybenzoic acid esters, alkoxybenzoic acid esters and alkylbenzoic acid esters are preferred and especially methyl benzoate, ethyl benzoate, methyl p-hydroxybenzoate, ethyl p-hydroxybenzoate, methyl p-methoxybenzoate, ethyl p-methoxybenzoate, methyl p-toluylate and ethyl p-toluylate are preferred.

Specific examples of the aromatic carboxylic acid include aromatic monocarboxylic acids such as benzoic acid, p-hydroxybenzoic acid, salicyclic acid, p-methoxybenzoic acid, o-methoxybenzoic acid, p-ethoxybenzoic acid, p-toluic acid and p-ethylebenzoic acid, and aromatic dicarboxylic acids such as phthalic acid.

The aromatic carboxylic acid derivatives are acid anhydrides and acid halides of the above-mentioned aronatic carboxylic acids.

Specific examples of the acid anhydrides of the aromatic carboxylic acids include aromatic monocarboxylic anhydrides such as benzoic anhydride, salicylic anhydride, p-methoxybenzoic anhdride, p-ethoxybenzoic anhydride, p-ethoxybenzoic anhydride , p-toluic anhydride p-ethylbenzoic annhydride, and aromatic dicarboxylic anhydrides such as phthalic anhydride.

As specific examples of the acid halides of the aromatic carboxylic acids, there may be mentioned aromatic monocarboxylic acid halides, for example, acid chlorides such as benzoyl chloride, p-hydroxybenzoyl chloride, p-methoxybenzoyl chloride, p-ethoxybenzoyl chloride, p-toluoyl chloride and p-ethylbenzoyl chloride acid bromides such as benzoyl bromide and p-methoxybenzoyl bromide acid iodides such as benzoyl iodide and aromatic dicarboxylic acid halides such as phthaloyl dichloride.

The organic aluminum compound is represented by the general formula: $R_mAlX_{3-m}$ wherein R represents an alkyl group or an aryl group, X represents a halogen atom, an alkoxy group or a hydrogen atom and m is any number in the range of $1 \leqslant m \leqslant 3$. Particularly, preferred are alkylaluminum compounds having 1 - 18 carbon atoms, preferably 2 - 6 carbon atoms, such as trialkylaluminums, dialkylaluminum monohalides, monoalkylaluminum dihalides, alkylaluminum sesquihalides, dialkylaluminum monoalkoxides, dialkylaluminum monohydrides, or a mixture or complex compound thereof. Specific examples thereof include trialkylaluminums such as trimethylaluminum, triethylaluminum, tripropylaluminum, triisobutylaluminum and trihexylaluminum, dialkylaluminum monohalides such as dimethylaluminum chloride, diethylaluminum chloride, diethylaluminum bromide, diethylaluminum iodide and diisobutylaluminum chloride, monoalkylaluminum dihalides such as methylaluminum dichloride, ethylaluminum dichloride, ethylaluminum dibromide, ethylaluminum diiodide and isobutylaluminum dichloride, alkylaluminum sesquihalides such as ethylaluminum sesquichloride, dialkylaluminum monoalkoxides such as dimethylaluminum methoxide, diethylaluminum ethoxide, diethylaluminum phenoxide, diproplaluminum ethoxide, diisobutylaluminum ethoxide and diisobutylaluminum phenoxide and dialkylaluminum hydrides such as dimethylaluminum hydride, diethylaluminum hydride, dipropylaluminum hydride and diisobutylaluminum hydride.

Among those, ethylaluminum dichloride, ethylaluminum sesquichloride, diethylaluminum chloride and triethylaluminum are especially desired.

The titanium compound is a compound of a divalent, trivalent or tetravalent titanium. Illustrative examples thereof include titanium tetrachloride, titanium tetrabromide, trichloroethoxy titanium, trichlorobutoxy titanium, dichlorodiethoxy titanium, dichlorodibutoxy titanium, dichlorodiphenoxy titanium, chlorotriethoxy titanium, chlorotributoxy titanium, tetrabutoxy titanium and titanium trichloride. Among those, tetravalent titanium halides such as titanium tetrachloride, trichloroethoxy titanium dichlorodibutoxy titanium and dichlorodiphenoxy titanium are preferred and titanium tetrachloride is particularly preferred.

The catalyst component of this invention may be obtained by contacting (a) the magnesium halide, (b) the electron donating compound, (c) the aromatic carboxylic acid or a derivative thereof, (d) the organic aluminum compound and (e) the titanium compound.

The component obtained by contacting the above-mentioned five compounds may be prepared by, for example, mixing and stirring the respective compounds in the presence, or absence, of an inert hydrocarbon and/or halogenated hydrocarbon, or the compounds can be mechanically co-ground.

Examples of the inert hydrocarbon are hexane, heptane, octane, cyclohexane, benzene, toluene or xylene. The inert halogenated hydrocarbon is meant to include mono- and poly-halogneated compounds of saturated or unsaturated aliphatic, alicyclic and aromatic hydrocarbons. Specific examples of these compounds include aliphatic compounds such as methyl chloride, methyl bromide, methyl iodide, methylene chloride, methylene bromide, methylene iodide, chloroform, bromform, iodoform, carbon tetrachloride, carbon tetrabromide, carbon tetraiodide, ethyl chloride, ethyl bromide, ethyl iodide, 1,2-dichloroethane, 1,2-dibromoethane, 1,2-diiodoethane, methylchloroform, methylchloroform, methyl-iodoform, 1,1,2-trichloroethylene, 1,1,2-tribromoethylene, 1,1,2,2-tetrachloroethylene, pentachloroethane, hexachloroethane, hexabromoethane, n-propyl chloride, 1,2-dichloropropane, hexachloropropylene, octachloro-propane, decabromobutane, chlorinated paraffins, alicyclic compounds such as chlorocyclopropane, tetrachlorocyclopentane, hexachloropentadiene and hexachlorocyclohexane, and aromatic compounds such as chlorobenzene, bromobenzene, o-dichlorobenzene, hexachlorobenzene, hexachlorobenzene, hexabromobenzene, benzotrichloride and p-chlorobenzotrichloride.

For contacting the respective compounds by mechanically co-grinding, a conventional grinding machine commonly employed for obtaining a ground material may be obtained, for example, a rotary ball mill, a vibration ball mill or an impact ball mill may be employed. The co-grinding treatment may be effected in vacuum or in an inert gas atmosphere, as needed, and in the substantial absence of moisture and oxygen.

Regarding the order of contacting (a) the magnesium halide, (b) the electron donating compound, (c) the aromatic carboxylic acid or a derivative thereof, (d) the organo aluminum compound and (e) the titanium compound, all the possible combinations are contemplated. Typical examples are as follows:

(1)   [ (a) + (b) + (c)][ + (d) + (e)]

(2)   [(a) + (b)] + (c) + (d) + (e)

(3)   [(a) + (c)] + (b) + (d) + (e)

(4)   [(a) + (c)] + (d) + (b) + (e)

(5)   [(a) + (b) + (c)] + (d) + (e)

(6)   [(a) + (b) + (e)] + (c) + (d)

(7)   [(a) + (c) + (e)] + (b) + (d)

The order of contacting is, of course, not limited to those described above, but desired ones among those are the above methods (1), (2), (4) and (5). That is, the method (1) comprises simultaneously contacting a simultaneously contacted product [(a) + (b) + (c)] of (a) the magnesium halide, (b) the electron donating compound and (c) the aromatic carboxylic acid or a derivative thereof with (d) the organo aluminum compound and (e) the titanium compound. The method (2) comprises contacting a contacted product [(a) + (b)] of (a) the magnesium halide and (b) the electron donating compound with (c) the aromatic carboxylic acid or a derivative thereof, then with (d) the organo aluminum compound, and further with (e) the titanium compound. The method (4) comprises contacting a contacted product [(a) + (c)] of (a) the magnesium halide and (c) the aromatic carboxylic acid or a derivative thereof with (d) the organic aluminum halide, then with (b) the electron donating compound, and further with (e) the titanium compound. The method (5) comprises contacting a simultaneously contacted product [(a) + (b) + (c)] of (a) the magnesium halide, (b) the electron donating compound and (c) the aromatic carboxylic acid or a derivative thereof with (d) the organo aluminum compound, and then with (e) the titanium compound. Among those, the above methods (2), (4) and (5) are particularly desired.

The above methods (2), (4) and (5) are now more particularly described below.

Method (2): After contacting, preferably mechanically co-grinding, (a) the magnesium halide and (b) the electron donating compound, the mixture is brought into contact with (c) the aromatic carboxylic acid or a derivative thereof in the presence of the aforementioned hydrocarbon and/or halogenated hydrocarbon, then with (d) the organo aluminum compound in the presence of the aforementioned hydrocarbon and/or halogenated hydrocarbon, separating the resulting solid material, washing it with an inert hydrocarbon, and further bringing it into contact with (e) the titanium compound in the presence or absence of the aforementioned hydrocarbon and/or halogenated hydrocarbon. The conditions for contact in this case are desirably as follows: when co-grinding (a) and (b): the molar ratio of (b)/(a) is from 0.1 to 1.0, the co-grinding time from 1 to 100 hours; when contacting $[(a) + (b)]$ with (c): the molar ratio of (b)/(c) is from 0.1 to 10, the slurry concentration of the co-ground product is from 30 to 500 g/l, the contacting temperature is from room temperature to 100°C, the contacting time is from 0.5 to 10 hours; when contacting $[(a) + (b)] + (c)$ with (d): the molar ratio of (c)/(d) is from 0.1 to 10, the contacting temperature is from 5 to 100°C, the contacting time is from 0.5 to 10 hours; when contacting $[(a) + (b)] + (c) + (d)$ with (e): [where treated by stirring the slurry] the slurry concentration is from 30 to 300 g/l, the contacting temperature is from 50°C to the boiling point of the titanium compound (136.4°C for titanium tetrachloride), the contacting time is from 0.5 to 20 hours, [where mechanically co-ground] the contacting temperature os from 20 to 150°C, the contacting time is from 0.5 to 100 hours.

Method (4): After contacting, preferably mechanically co-grinding, (a) the magnesium halide and (c) the aromatic carboxylic acid or a derivative thereof, the mixture is brought into contact with (d) the organo aluminum compound in the presence of the aforementioned hydrocarbon and/or halogenated hydrocarbon, then with (b) the electron donating compound in the presence of the aforementioned hydrocarbon and/or halogenated hydrocarbon, separating the resulting solid material, washing it with an inert hydrocarbon, and further bringing it into contact with (e) the titanium compound in the presence or absence of the aforementioned hydrocarbon and/or halogenated hydrocarbon. The conditions for contact in this case are desirably as follows: when co-grinding (a) and (c): the molar ratio of (c)/(a) is from 0.1 to 1.0, the co-grinding time is from 1 to 100 hours; when contacting [(a) + (c)] with (d): the molar ratio of (c)/(d) is from 0.1 to 10, the slurry concentration of the co-ground product is from 30 to 500 g/l, the contacting temperature is from 5 to 100°C, the contacting time is from 0.5 to 10 hours when contacting [(a) + (c)] + (d) with (b): the molar ratio of (b)/(c) is from 0.1 to 10, the contacting temperature is from room temperature to 100°C, the contacting time is from 0.5 to 10 hours, when contacting [(a) + (c)] + (d) + (b) with (e): [where treated by stirring the slurry] the slurry concentration is from 30 to 300 g/l, the contacting temperature is from 50°C to the boiling point of the titanium compound (136.4°C for titanium tetrachloride), the contacting time is from 0.5 to 20 hours, [where mechanically co-ground] the contacting temperature is from 20 to 150°C, the contacting time is from 0.5 to 100 hours.

Method (5): After contacting, preferably mechanically co-grinding, (a) the magnesium halide, (b) the electron donating compound and (c) the aromatic carboxylic acid or a derivative thereof, the mixture is brought into contact with (d) the organo aluminum compound in the presence of the aforementioned hydrocarbon and/or halogenated hydrocarbon, and then with (e) the titanium compound in the presence or absence of the aforementioned hydrocarbon and/or halogenated hydrocarbon. The conditions for contact in this case are desirably as follows: when co-grinding (a), (b) and (c): the molar ratio of (b)/(c) is from 0.1 to 10, the sum of (b) and (c) comprising from 5 to 50% by weight of the total amount, the co-grinding time is from 1 to 100 hours; when contacting [(a) + (b) + (c)] with (d): the molar ratio of (c)/(d) is from 0.1 to 10, the slurry concentration of the co-ground product is from 30 to 500 g/l, the contacting temperature is from room temperature to 100°C, the contacting time is from 0.5 to 10 hours; when contacting [(a) + (b) + (c)] + (d) with (e): [where treated by stirring the slurry] the slurry concentration is from 30 to 300 g/l, the contacting temperature is from 50°C to the boiling temperature of the titanium compound (136.4°C for titanium tetrachloride), the contacting time is from 0.5 to 20 hours, [where mechanically co-ground] the contacting temperature is from 20 to 150°C, the contacting time is from 0.5 to 100 hours.

The solid material obtained by contacting the five components as above is separated from the reaction system, washed with the aforementioned inert hydrocarbon, as needed, and dried to provide the catalyst component of this invention.

Alternatively, the solid material obtained by contacting the five components may be treated by bringing it into contact with the aforementioned inert hydrocarbon and/or halogenated hydrocarbon, the resulting solid material being separated, washed with the aforementioned inert hydrocarbon and dried to provide the catalyst component of this invention. As the conditions for contact when using the aforementioned hydrocarbon and/or halogenated hydrocarbon, it is preferred to employ said hydrocarbon and/or halogenated hydrocarbon in an amount in the range of from 0.5 to 50 times by weight that of said solid material and conduct at a contacting temperature of from 20 to 200°C for a contacting time of from 0.5 to 20 hours.

The catalyst component of this invention is combined with an organic aluminum compound to make a catalyst for homopolymerizing an alpha-olefin or copolymerizing it with ethylene or other alpha-olefin.

The organo aluminum compound to be combined with the catalyst component in polymerizing an alpha-olefin is represented by the general formula: $R_n AlX_{3-n}$ wherein R represents an alkyl group or an aryl group, X represents a halogen atom, an alkoxy group or a hydrogen atom and n is any number in the range of $1 \leq n \leq 3$, and particularly preferred are alkylaluminum compounds having about 1 to about 18 carbon atoms, preferably about 2 to about 6 carbon atoms, such as trialkylaluminums, dialkylaluminum monohalides, monoalkylaluminum dihalides, alkylaluminum sesquihalides, dialkylaluminum monoalkoxides and dialkylaluminum monohydrides, or a mixture or complex compound thereof. Specific examples thereof include trialkylaluminums such as trimethylaluminum, triethylaluminum, tripropylaluminum, triisobutylaluminum and trihexylaluminum, dialkylaluminum monohalides such as dimethylaluminum chloride, diethylaluminum chloride, diethylaluminum bromide, diethylaluminum iodide and diisobutylaluminum chloride, monoalkylaluminum dihalides such as methylaluminum dichloride, ethylaluminum dichloride, ethylaluminum dibromide, ethylaluminum diiodide and isobutylaluminum dichloride, alkylaluminum sesquihalides such as ethylaluminum sesquichloride, dialkylaluminum monoalkoxides such as dimethylaluminum methoxide, diethylaluminum ethoxide, diethylaluminum phenoxide, dipropylaluminum ethoxide, diisobutylaluminum ethoxide and diisobutylaluminum phenoxide, and dialkylaluminum hydrides such as dimethylaluminum hydride, diethylaluminum hydride, dipropylaluminum hydride, diisobutylaluminum hydride.

Among those, trialkylaluminums, particularly triethylaluminum and triisobutylaluminum are desired. In addition, these trialkylaluminums may be used in combination with other organic aluminum compounds, for example, industrially easily available diethylaluminum chloride, ethylaluminum dichloride, ethylaluminum sesquichloride, diethylaluminum ethoxide, diethylaluminum hydride, or a mixture or complex thereof.

Further, the organic aluminum compounds are desirably used in combination with an electron donating compound, although they can be used alone. As the electron donating compound, there may be mentioned carboxylic acids, carboxylic acid esters, alcohols, ethers, ketones, amines, amides, nitriles, aldehydes, alcoholates, phosphorous, arsenic or antimony compounds in which each such element is attached directly or via carbon or oxygen to the organic group, phosphamides, thioethers, thioesters and carbonic acid esters, among which preferably employed are the carboxylic acid esters.

Illustrative examples of the carboxylic acid esters include butyl formate, ethyl acetate, butyl acetate, ethyl acrylate, ethyl butyrate, isobutyl isobutyrate, methyl methacrylate, diethyl maleate, diethyl tartrate, ethyl cyclohexanecarboxylate, ethyl benzoate, ethyl p-methoxybenzoate, methyl p-methylbenzoate, ethyl p-tert-butylbenzoate, dibutyl phthalate, diallyl phthalate and ethyl alpha-naphthoate. Among those, preferably employed are alkyl esters of aromatic carboxylic acids, especially alkyl esters of benzoic acid or nucleus-substituted benzoic acids such as p-methylbenzoic acid, p-methoxybenzoic acid, etc., in which the alkyl is of from 1 to 8 carbon atoms. Any of these electron donating compounds may be used when the organic aluminum compound is used in combination with the catalyst component or may be used after it has been brought into contact with the organic aluminum compound.

The amount of the organo aluminum compound to be used relative to the catalyst component of this invention is generally from 1 to 2000 moles per gram atom of titanium in said catalyst component, from 20 to 500 moles being particularly preferred.

Further, the mixing ratio of the organo aluminum compound and the electron donating compound is chosen in such range that the organo aluminum compound calculated as aluminum is present in an amount of from 0.1 to 40 gram atoms, preferably from 1 to 25 gram atoms, per mole of electron donating compound.

The thus obtained catalyst composed of the catalyst component and the organo aluminum compound (and the electron donating compound) exhibits extremely excellent performance as a catalyst for homopolymerization of alpha-olefins, especially alpha-olefins having from 3 to 6 carbon atoms, for example, propylene, butene-1, 4-methylpentene-1 or hexene-1, and random and block copolymerizations of the above-mentioned alpha-olefins with one another and/or with ethylene.

The polymerization reaction may be conducted either in the gaseous phase or in the liquid phase, and in the latter case, it may be either in an inert hydrocarbon or in a liquid monomer. Suitable solvents which can be used in polymerization in a solvent are selected from inert hydrocarbons such as hexane, heptane, cyclohexane, benzene, toluene or xylene. The temperature is generally in the range of from $-80^\circ$C to $150^\circ$C, preferably 40 to $100^\circ$C. The pressure may be, for example, from 1 to 40 atms. The control of the molecular weight during polymerization is effected by a known method by making hydrogen or other known moleuclar weight modifier present in the system. Further, when ethylene is used as a comonomer in copolymerization, its amount is chosen from the range of up to 30% by weight based on the alpha-olefin, especially from 1 to 15% by weight. The polymerization reaction using the catalyst system according to this invention is conducted either on a continuous basis or in a batchwise manner. Their conditions may be the same as those commonly employed.

The process of this invention is particularly effective for production of isotactic polypropylene, a random copolymer of ethylene and propylene and a block copolymer of ethylene and propylene.

The polymerization catalyst utilizing the catalyst component of this invention has a high polymerization activity and high stereoregularity, and the resulting alpha-olefin polymer powder has a high bulk density. Furthermore, the polymer powder product is high in free-flowing properties.

This invention is more particularly described by the following examples. However, this invention is not limited to these examples. In the examples, the percent (%) is by weight unless otherwise stated. The polymerization activity Kc is the amount of the polymer produced (g) per gram of the catalyst, and Kt is the amount of the polymer produced (kg) per gram of Ti in the catalyst. The heptane insolubles (hereinafter referred to as HI) which indicates the proportion of the crystalline polymer in the polymer is the amount of the residue when extracted with boiling n-heptane on a modified Soxhlet's extractor. The melt flow rate (MFR) was measured according to ASTM-D 1238. The bulk density was measured according to ASTM-D 1895-69 Method A.

Example 1

To a stainless steel (SUS 32) mill pot having an internal volume of 300 ml and containing 100 stainless steel (SUS 32) balls of 10 mm in diameter were added, under nitrogen gas atmosphere, 26.1 g of anhydrous magnesium chloride, 5.5 ml (38.5 mmol) of ethyl benzoate and 5.5 g (39.1 mmol) of benzoyl chloride. The mill pot was fitted in a shaker, and the contact was conducted by shaking for 15 hours to obtain the magnesium-containing solid.

7.2 g of the thus obtained ground solid was added to a 300 ml glass reactor equipped with a stirrer under nitrogen gas atmosphere, and 110 ml of 1,2-dichloroethane was added thereto, followed by dropwise addition of a mixed solution of 0.81 ml (7.7 mmol) of ethylaluminum dichloride and 10 ml of 1,2-dichloroethane with stirring at 32°C over 15 minutes, after which stirring was continued at 70°C for 2 hours. The resulting solid material was filtered out at 70°C and washed with 150 ml portions of n-hexane at 65°C five times.

Thereafter, 120 ml of titanium tetrachloride was added to this solid material and stirring was conducted at 120°C for 2 hours. The resulting solid material was filtered out at 120°C, washed with 150 ml portions of n-hexane at 65°C seven times, and dried at 50°C under reduced pressure for an hour, to obtain the catalyst component. This catalyst component contained 2.4% of titanium atoms.

To a stainless steel (SUS 32) autoclave having an internal volume of one liter and equipped with a stirrer was added under nitrogen gas

- 14 -

atmosphere a mixture of 69.5 mg of the catalyst component obtained above, 10.9 ml of a n-heptane solution containing 1 mole of triethylaluminum (hereinafter referred to as TEAL) in one liter of n -heptane, the amount of which corresponded to 310 gram atoms calculated as aluminum per gram atom of titanium in the catalyst component and 0.48 ml of ethyl p-methoxybenzoate, the amount of which corresponded to 0.30 mole per gram atom of aluminum in said TEAL, said mixture being held for 5 minutes before charging. Thereafter, 0.6 l of hydrogen gas as a molecular weight modifier and 0.8 l of liquified propylene were charged under pressure, after which the temperature of the reaction system was raised to 68°C and polymerization of propylene was conducted for 30 minutes. After completion of the polymerization, the unreacted propylene was purged, to obtain 215 g of a white polypropylene powder (Kc = 3090, Kt = 129) having an HI of 92.7%, an MFR of 3.6 and a bulk density of 0.39 g/cm$^3$.

Similarly, an experiment on polymerization of propylene employing a polymerization time of an hour was conducted, to give the results of an HI of 93.3%, an MFR of 4.2, a bulk density of 0.39 g/cm$^3$, a Kc of 4330 and a Kt of 180. Further, another polymerization experiment employing a polymerization time of 3 hours gave the results of an HI of 92.1%, an MFR of 7.3, a bulk density of 0.40 g/cm$^3$, a Kc of 5270 and a Kt of 220.

Examples 2-4

Procedures similar to those in Example 1 were followed except that the ethylaluminum dichloride used for contacting with the ground solid in Example 1 was replaced by ethylaluminum sesquichloride (Example 2), diethylaluminum monochloride (Example 3) or triethylaluminum (Example 4), to obtain the catalyst component having the titanium content set forth in Table 1 in each case.

Polymerization of propylene was conducted by procedures similar to those in Example 1 but using the three catalyst components obtained above respectively. The results are given in Table 1.

Example 5

Procedures similar to those in Example 1 were followed except that, when the ground solid was treated with ethylaluminum dichloride in Example 1, the 1,2-dichloroethane used in the diluent for the ground solid was replaced by n-hexane and the 1,2-dichloroethane used for mixing with ethylaluminum dichloride was replaced by n-hexane, to obtain the catalyst component.

Employing the catalyst component obtained above, polymerization of propylene was conducted by procedures similar to those in Example 1. The results are given in Table 1.

Example 6

22.0 g of anhydrous magnesium chloride, 3.6 m. (25.2 mmol) of ethyl benzoate and 5.6 g (24.8 mmol) of benzoic anhydride were co-ground in a similar manner as in Example 1, to obtain a ground solid. This ground solid was subjected to procedures similar to those in Example 1 to obtain the catalyst component.

Employing the catalyst component obtained above, polymerization of propylene was conducted by procedures similar to those in Example 1. The results are given in Table 1.

Example 7

20.9 g of anhydrous magnesium chloride, 4.7 ml (32.9 mmol) of ethyl benzoate and 4.5 g (36.8 mmol) of benzoic acid were co-ground in a similar manner as in Example 1, to obtain a ground solid. This ground solid was subjected to procedures similar to those in Example 1 to obtain the catalyst component.

Employing the catalyst component obtained above, polymerization of propylene was conducted by procedures similar to those in Example 1. The results are given in Table 1.

Comparative Example 1

Only 21.1 g of anhydrous magnesium chloride and 4.8 ml of ethyl benzoate were co-ground in a similar manner as in Example 1, to obtain a ground solid. This ground solid was subjected to procedures similar to those in Example 1 to obtain the catalyst component.

Employing the catalyst component obtained above, polymerization of propylene was conducted by procedures similar to those in Example 1. The results are given in Table 1.

Comparative Example 2

Only 21.0 g of anhydrous magnesium chloride and 6.6 g of benzoyl chloride were co-ground in a similar manner as in Example 1, to obtain a ground solid. This ground solid was subjected to procedures similar to those in Example 1 to obtain the catalyst component.

Employing the catalyst component obtained above, polymerization of propylene was conducted by procedures similar to those in Example 1. The results are given in Table 1.

## Table 1

| Example | Catalyst Component Ti Content (%) | Polymeri-zation Time (hrs) | Catalyst Efficiency | | HI (%) | Bulk Density (g/cm³) | MFR (g/10 min) |
|---|---|---|---|---|---|---|---|
| | | | Kc (g/g-Cat) | Kt (Kg/g-Ti) | | | |
| Ex. 1 | 2.4 | 0.5 | 3090 | 129 | 92.7 | 0.39 | 3.6 |
| | " | 1.0 | 4330 | 180 | 93.3 | 0.39 | 4.2 |
| | " | 3.0 | 5270 | 220 | 92.1 | 0.40 | 7.3 |
| Ex. 2 | 2.5 | 0.5 | 3370 | 135 | 94.2 | 0.41 | — |
| Ex. 3 | 2.3 | 0.5 | 3360 | 149 | 94.4 | 0.42 | — |
| Ex. 4 | 2.0 | 0.5 | 4160 | 207 | 94.7 | 0.38 | — |
| Ex. 5 | 2.6 | 0.5 | 2890 | 110 | 94.0 | — | — |
| Ex. 6 | 2.7 | 0.5 | 4080 | 151 | 91.5 | 0.40 | — |
| | " | 1.0 | 4870 | 180 | 91.3 | 0.38 | — |
| Ex. 7 | 2.1 | 0.5 | 4500 | 214 | 95.8 | 0.40 | 2.0 |
| Compara-tive Ex. 1 | 4.2 | 0.5 | 2590 | 62 | 83.4 | 0.35 | 18.2 |
| | " | 1.0 | 3020 | 72 | 80.3 | 0.34 | 26.3 |
| Compara-tive Ex. 2 | 1.5 | 0.5 | 1010 | 67 | 84.7 | 0.35 | 20.3 |

Example 8

24.8 g (260 mmol) of anhydrous magnesium chloride and 4.1 ml (28.7 mmol) of ethyl benzoate were added to the mill used in Example 1, and subjected to co-grinding treatment similar to that in Example 1, to obtain a ground solid.

6.6 g of the thus obtained ground solid was added to a 200 ml glass reactor equipped with a stirrer, and 2.0 g (8.8 mmol) of benzoic anhydride and 120 ml of 1,2-dichloroethane were added thereto, followed by stirring at 60°C for an hour. Thereafter, a mixture of 0.93 ml (8.8 mmol) of ethylaluminum dichloride and 10 ml of 1,2-dichloroethane were added dropwise at 42°C over 10 minutes, and stirring was further continued at 67°C for 1.5 hours. The resulting solid material was filtered out at 67°C, and washed with 150 ml portions of n-hexane at 65°C five times.

Thereafter, 100 ml of titanium tetrachloride was added to this solid material, and stirring was conducted at 115°C for 2 hours. The resulting solid material was filtered out at 115°C, washed with 150 ml portions of n-hexane at 65°C, and dried at 50°C under reduced pressure for an hour to obtain the catalyst component. This catalyst component contained 1.9% of titanium atoms.

Employing the catalyst component obtained above, polymerization of propylene was conducted by procedures similar to those in Example 1. The results are given in Table 2.

Examples 9 and 10

Procedures similar to those in Example 8 were followed except that the benzoic anhydride used for treating the ground solid in Example 8 was replaced by benzoyl chloride (Example 9) or benzoic acid (Example 10), to obtain the catalyst component in each case.

Polymerization of propylene was conducted by procedures similar to those in Example 1 but using the two catalyst components obtained above respectively. The results are given in Table 2.

Example 11

19.4 g (204 mmol) of anhydrous magnesium chloride and 6.1 g (43.4 mmol) of benzoyl chloride were added to the mill used in Example 1, and subjected to co-grinding treatment similar to that in Example 1, to obtain a ground solid.

5.5 g of the thus obtained ground solid was added to a 200 ml glass reactor equipped with a stirrer, and a mixture of 0.97 ml (9.2 mmol) of ethylaluminum dichloride and 10 ml of 1,2-dichloroethane was added dropwise at 30°C over 15 minutes, followed by stirring at 70°C for 2 hours. The resulting solid material was filtered out at 70°C and washed with 150 ml portions of n-hexane at 65°C five times.

Thereafter, to this solid material was added dropwise a mixture of 1 ml (7.0 mmol) of ethyl benzoate and 10 ml of n-hexane at 40°C over 15 minutes, and the mixture was stirred at 68°C for 2 hours. The resulting solid material was filtered out at 68°C and washed with 150 ml portions of n-hexane at 65°C.

Further, 120 ml of titanium tetrachloride was added to this solid material, and stirring was conducted at 120°C for 2 hours. The resulting solid material was filtered out at 120°C, washed with 150 ml portions of n-hexane at 65°C seven times, and dried at 50°C under reduced pressure, to obtain the catalyst component. This catalyst component contained 1.7% of titanium atoms.

Employing the catalyst component obtained above, polymerization of propylene was conducted by procedures similar to those in Example 1. The results are given in Table 2.

Example 12

To a stainless steel (SUS 32) mill pot having an internal volume of 300 ml and containing 100 stainless steel (SUS 32) balls of 10 mm in diameter were added, under nitrogen gas atmosphere, 24.8 g of anhydrous magnesium chloride, 5.7 ml (39.9 mmol) of ethyl benzoate and 4.5 g (19.9 mmol) of benzoic anhydride. The mill pot was fitted in a shaker, and the contact was conducted by shaking for 15 hours to obtain the magnesium-containing solid.

28.9 g of the thus obtained ground solid was added to a 500 ml glass reactor equipped with a stirrer under nitrogen gas atmosphere, and 250 ml of 1,2-dichloroethane was added thereto, followed by dropwise addition of a mixed solution of 4.7 ml (34.4 mmol) of triethylaluminum and 20 ml of 1,2-dichloroethane with stirring at 32°C over 15 minutes, after which stirring was continued at 70°C for 2 hours. The resulting solid material was filtered out at 70°C and washed with 150 ml portions of n-hexane at 65°C five times, and dried at 50°C under reduced pressure for an hour.

- 20 -

18.6 g of the thus obtained treated solid and 3.4 ml of titanium tetrachloride were added to the above-mentioned mill pot under nitrogen gas atmosphere, and the grinding was conducted for 15 hours.

9.32 g of the above-mentioned titanium-containing solid was added to a 200 ml glass reactor equipped with a stirrer under nitrogen gas atmosphere, and 12.7 g of hexachloroethane and 100 ml of 1,2-dichloroethane was added thereto, followed by stirring at reflux temperature of 1,2-dichloroethane for 2 hours. The resulting solid material was filtrated out at the same temperature and washed with 100 ml of n-hexane at 65°C five times, and dried at 50°C under reduced pressure for an hour, to obtain the catalyst component. This catalyst component contained 2.3% of titanium atoms.

Table 2

| Example | Catalyst Component Ti Content (%) | Polymeriza-tion Time (hrs) | Catalyst Efficiency | | III (%) | Bulk Density (g/cm$^3$) | MFR (g/10 min) |
|---|---|---|---|---|---|---|---|
| | | | Kc (g/g-Cat) | Kt (Kg/g-Ti) | | | |
| Ex. 8 | 1.9 | 0.5 | 4080 | 215 | 94.7 | 0.33 | 1.4 |
| Ex. 9 | 2.1 | 0.5 | 4010 | 196 | 94.6 | 0.32 | - |
| Ex. 10 | 2.1 | 0.5 | 4430 | 211 | 95.6 | 0.34 | 1.2 |
| Ex. 11 | 1.7 | 0.5 | 1670 | 98 | 93.9 | 0.38 | - |

- 22 -

Employing the catalyst component obtained above, polymerization of propylene was conducted by procedures similar to those in Example 1. The results are given in Table 4.

Example 13

In preparing the catalyst component, procedures similar to those in Example 12 were followed except that the benzoic anhydride was replaced by benzoic acid. The amount of reagents were shown in Table 3.

Employing the catalyst component obtained above, polymerization of propylene was conducted by procedures similar to those in Example 1. The results are given in Table 4.

Example 14

In preparing the catalyst component, procedures similar to those in Example 12 were followed except that the benzoic anhydride was replaced by benzoyl chloride. The amount of reagents were shown in Table 3.

Employing the catalyst component obtained above, polymerization of propylene was conducted by procedures similar to those in Example 1. The results are given in Table 4.

Table 3

| | Example 13 | Example 14 |
|---|---|---|
| $MgCl_2$ (g) | 24.9 | 23.2 |
| Ethylbenzoate (ml) | 6.9 | 6.4 |
| Benzoic acid (g) | 5.9 | − |
| Benzoyl chloride (ml) | − | 4.6 |
| Ground solid (g) | 27.2 | 28.0 |
| Triethyl aluminum (ml) | 4.7 | 4.3 |
| Treated solid (g) | 17.2 | 18.4 |
| Titanium tetrachloride (ml) | 3.1 | 3.5 |
| Titanium containing solid (g) | 9.2 | 9.5 |
| Hexachloroethane (g) | 7.9 | 8.1 |
| 1,2-Dichloroethane (ml) | 100 | 100 |

Table 4

| Example | Catalyst Component Ti Content (%) | Polymeri-zation Time (hrs) | Catalyst Efficiency kc (g/g-cat) | kt (kg/g-Ti) | HI (%) | Bulk Density (g/cm³) | MFR (g/10 min.) |
|---|---|---|---|---|---|---|---|
| 12 | 2.3 | 0.5 | 5,450 | 237 | 96.1 | 0.39 | 3.3 |
|  | " | 1.0 | 7,680 | 334 | 95.5 | 0.40 | 4.0 |
|  | " | 3.0 | 9,530 | 414 | 95.0 | 0.41 | 4.5 |
| 13 | 2.5 | 0.5 | 4,980 | 199 | 95.5 | 0.39 | 2.8 |
| 14 | 2.5 | 0.5 | 4,600 | 184 | 94.5 | 0.39 | 4.1 |

CLAIMS

1.    A process for preparing a titanium-containing catalyst component for polymerization of alpha-olefins characterized by contacting:
    (a)    a magnesium halide,
    (b)    an electron donating compound,
    (c)    an aromatic carboxylic acid or a derivative thereof,
    (d)    an organo aluminum compound, and
    (e)    a titanium compound.

2.    A process according to claim 1 characterized in that the magnesium halide and the electron donating compound are co-ground together and thereafter contacted with an aromatic carboxylic acid or derivative thereof, the organo aluminum compound, and a titanium compound.

3.    A process according to claim 1 characterized in that the magnesium halide and the aromatic carboxylic acid or derivative thereof are co-ground together and thereafter contacted with the organoaluminum compound, the electron donating compound and the titanium compound.

4.    A process according to claim 1 characterized in that the magnesium halide, the electron donating compound and the aromatic carboxylic acid or derivative thereof are co-ground together and thereafter contacted with an organoaluminum compound, and the titanium compound.

5.    A process according to any of claims 2 to 4, characterized in that the magnesium halide is magnesium chloride, the electron donating compound is a carboyxlic acid ester, the organoaluminum compound is of the formula: $R_m AlX_{3-m}$ wherein R represents an alkyl group or an aryl group, X represents a halogen atom, an alkoxy group or a hydrogen atom and m is any number in the range of $1 \leq m \leq 3$ and the titanium compound is $TiCl_4$.

6.    A titanium-containing catalyst component characterized in that it is prepared by a process according to any of claims 1 to 5.

7.  A catalyst for the polymerization of alpha-olefins, said catalyst characterized by:

(a)  a catalyst component according to claim 6, and

(b)  an organoaluminum compound represented by the general formula: $R_mAlX_{3-m}$ wherein R represents an alkyl group or an aryl group, X represents a halogen atom, an alkoxy group or a hydrogen atom and m is any number within the range of $1 \leq m \leq 3$.

8.  A method for homopolymerizing an alpha-olefin or copolymerizing an alpha-olefin with other alpha-olefin(s) and/or with ethylene characterized in that the polymerization is effected in the presence of a catalyst according to claim 7.

0050497

European Patent Office

**EUROPEAN SEARCH REPORT**

Application number

EP 81 30 4845

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>FR - A - 2 283 909</u> (MITSUI) <br> * Claims 1-3,8,9; page 7, lines 24-27; line 34 - page 12, line 10 * <br><br> & GB - A - 1 502 886 <br><br> -- | 1,5-8 | C 08 F 10/00 <br> 4/64 <br> 4/02 |
| Y | <u>FR - A - 2 361 423</u> (MONTEDISON) <br> * Claims 1,2; page 5, lines 20-25 * | 1 | |
| P | & GB - A - 1 589 983 <br><br> -- | | TECHNICAL FIELDS SEARCHED (Int.Cl. 3) |
| DA | CHEMICAL ABSTRACTS, vol. 89, no. 16, 16th October 1978, page 19, no. 130178n <br> Columbus, Ohio, U.S.A. <br><br> & JP - A - 78 00277 (SHOWA DENKO K.K.) 05-01-1978 <br> * Abstract * <br><br> -- | 1 | C 08 F 10/00- <br> 10/14 <br> 110/00- <br> 110/14 <br> 210/00- <br> 210/16 <br> 4/64 <br> 4/62 <br> 4/02 |
| DA | CHEMICAL ABSTRACTS, vol. 90, no. 26, 25th June 1979, page 26, no. 204869h <br> Columbus, Ohio, U.S.A. <br><br> & JP - A - 79 17988 (SHOWA DENKO K.K.) 09-02-1979 <br> * Abstract * <br><br> -- | 1 | |
| | | | CATEGORY OF CITED DOCUMENTS |
| A | <u>DE - A - 2 656 055</u> (MITSUI) <br> * Claims 1-10 * | 1,3 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| L | & JP - A - 79 160 488 <br><br> ---- | | |
| | | | &: member of the same patent family, corresponding document |

| | | |
|---|---|---|
| X | The present search report has been drawn up for all claims | |
| Place of search | Date of completion of the search | Examiner |
| The Hague | 29-01-1982 | WEBER |

EPO Form 1503.1 06.78